# EUROPEAN PATENT SPECIFICATION

(11) **EP 2 018 477 B1**
(45) Date of publication and mention of the grant of the patent: **01.07.2015**
(21) Application number: 07732399.6
(22) Date of filing: 12.04.2007
(51) Int. Cl.: F03D 9/00, F03D 9/02, B63B 35/00, F03B 13/12

(54) **OFFSHORE APPARATUS FOR CAPTURING ENERGY**
OFFSHORE-VORRICHTUNG ZUR GEWINNUNG VON ENERGIE
INSTALLATION OFFSHORE POUR CAPTER DE L'ÉNERGIE

(30) Priority: 13.04.2006 GB 0607507
(43) Date of publication of application: 28.01.2009
(73) Proprietor: West Ocean Energy Limited, Aberdeen Aberdeenshire AB15 4YY (GB)
(72) Inventor: West Alan, Glasgow G5 8PL (GB)
(74) Representative: Allan, James Stewart
(86) International application number: PCT/GB2007/001356
(87) International publication number: WO 2007/122376

(56) References cited:
- WO-A-01/34973
- GB-A- 2 383 204
- GB-A- 2 383 978
- US-A- 3 988 592
- US-A- 4 159 427
- US-A- 4 850 190
- US-A- 6 100 600

## Description

The present invention relates to offshore apparatus for capturing energy, and, in one particular embodiment, to apparatus having an array of energy capture devices.

There is significant interest in capturing and extracting energy from renewable sources for use by consumers, and it is desirable to do so in an environmentally clean manner. Natural renewable energy sources are provided by the oceans and weather systems, and include for example wind, wave and solar sources. In the offshore environment, these sources are available simultaneously, and various methods exist for capturing energy in the offshore environment.

Typically, offshore power plants for capturing energy are installed in a particular offshore locality, and are moored or anchored to the seabed. However, the weather conditions experienced at a particular locality can be generally unpredictable, and there can be long periods, for example associated with seasonal or daily cycles, in which wind, waves or sun do not provide a significant source of energy. In addition, the ocean in that locality may experience with fluctuations in temperature, salinity and variations in wave height. Such a power plant is shown in WO 01/34973 A1.

Accordingly, these power or energy capture and conversion plants can be susceptible to periods of low power production, and for large periods of time may not operate at full capacity.

It has been proposed to provide power plants that are movable to locations where conditions for the capture of energy are more favourable. However, significant distances may need to be covered to capture energy. Another drawback is that the power plant typically needs to travel long distances to offload converted power. This can be inconvenient and costly. In addition, once in a location for offloading, it can be a time-consuming process to make a connection for exporting the power from the plant.

Another power plant according to the state of the art is shown in US-A-6,200,600.

Accordingly, existing techniques for energy capture and offloading are not optimal.

It is an aim of the present invention to obviate or at least mitigate drawbacks and deficiencies associated with prior art methods.

It is an object of at least one embodiment of the invention to provide apparatus that can provide for more efficient capture of energy and export of power.

Other aims and objects will become apparent from the description below.

According to a first aspect of the invention, there is provided offshore apparatus for capturing energy according to claim 1, the apparatus comprising an arrangement of energy capture devices operable to capture energy to generate an exportable product; wherein the arrangement comprises a plurality of interface points, which are spaced apart from each other, each interface point being adapted to be selectively connected to an offloading unit for moving the exportable product away from the energy capture devices.

Thus, in use, a suitable interface point can be chosen to make a connection for exporting the product. Advantageously, the interface point for connection can be selected, for example, to be the interface point that is closest to the offloading unit, and/or the interface point that is easiest to connect, such that distance of travel and/or time can be minimised and so that energy capture and removal of the product can be carried out efficiently.

The term "energy capture device" should be understood to include energy capture and energy extraction devices.

Preferably, the arrangement of energy capture devices is a mobile arrangement. More specifically, the arrangement may be configured for mobility. Further, the arrangement may be movably located over a seabed location. Thus, the arrangement may be readily moved from a first to a second location.

The arrangement of energy capture devices comprises an array of energy capture devices. The array may be adapted to be towed and/or transported by a vessel, or may be autonomously movable under own propulsion.

The exportable product may comprise one or more of: electrical power; gas; liquids; and fuels.

The energy capture device may take the form of a floating buoy, or may be a ship or vessel. The energy capture devices may be manned or unmanned devices.

Preferably, each of the plurality of interface points form part of separate energy capture devices. The interface points may be movable. The energy capture devices may each comprise an interface point.

The arrangement and/or array may comprise a first energy capture device connected to a second energy capture device. The first and second energy capture devices may be electrically and/or fluidly connected to each other. This allows an export product such as power and/or a fluid to be transmitted between the energy capture devices. Thus, in use, the first energy capture device may be connected to the offloading unit, and an export product generated by the second energy capture device may be exported from the array via the first energy capture device. In this way, the export product produced by a series of energy capture devices may be exported while an interface point is connected to an offloading unit.

The energy capture devices may be movable laterally and/or rotationally, and may be movable laterally and/or rotationally, e.g., within an array. This allows the energy capture devices to be independently moved into favourable orientations for capturing energy. The energy capture devices may be adapted to capture solar, wind and/or ocean energy, and may comprise solar panels and/or cells, wind turbines, wave energy capture devices and/or other suitable energy capture units, e.g., for capturing energy from tidal currents, salinity gradients, and/or thermal differences. Thus, different forms of energy can be captured according to requirements, and as appropriate to a particular location offshore.

Each energy capture device is preferably adapted to float on the sea surface, and may comprise a motor and/or propeller for moving the energy capture device within the array. The energy capture device may be adapted to be steered, and may comprise a rudder to facilitate steering. The device may be adapted to be steered from a remote location, such as a second energy capture device. More specifically, the energy capture device may be adapted for remote control of the energy capture device. In other embodiments, the energy capture device may be configured to automatically steer into a favourable orientation for energy capture.

The arrangement may comprise a first energy capture device adapted to control a second energy capture device, e.g., as a "mother ship" or a "master and slave" relationship. The first energy capture device may be adapted to control the second energy capture device remotely, e.g. by remote means, and the first device may control the second device following pre-programmed instructions. The first energy capture device may comprise a computer, which may be pre-programmed or configured to control the second device.

In certain embodiments, the apparatus may be adapted to produce hydrogen and/or oxygen by using generated power to electrolyse water.

Preferably, the arrangement comprises storage means for storing the export product. The energy storage means may be adapted to store energy in the form of heat, compressed air or gas, such as hydrogen or oxygen, liquid and/or other suitable storage forms. The storage means may comprise a power storage unit, which may comprise one or more batteries, accumulators and/or other energy storage means. The storage unit may comprise a flywheel for energy storage. Thus, the export product can be stored temporarily until it can be offloaded when connection is made to the offloading unit. Alternatively, the storage means may comprise an intermediate product adapted to provide for storage of energy, e.g., a fluid.

The storage means may comprise a tank for storing gas and/or other fluid export products.

The energy capture device may comprise export apparatus for facilitating export of the export product. The export apparatus may comprise a pump operable to pump the product from the device. Further, the export apparatus may comprise a connector for facilitating connection of the interface to the offloading unit.

More specifically, the connection apparatus may comprise an export line or conduit adapted to connect to the offloading unit and the energy capture device at the interface point. The conduit may be configured to permit transmission of fluid and/or electrical power from the energy capture device to the offloading unit through the export conduit.

In a preferred embodiment, the apparatus may comprise a ship adapted to tow the arrangement of energy capture devices. The ship may be adapted to repeatedly deploy the arrangement and/or recover the arrangement of energy capture devices. The ship may be adapted to repeatedly receive and/or store the arrangement onboard for transport and/or transit, and to deploy the arrangement in the water for operation and energy capture. The ship may be a "mother ship", and may be adapted to control the energy capture devices, e.g., remotely. The apparatus may be operable to capture energy while the arrangement is being towed.

According to a second aspect of the invention as defined in claim 10, there is provided a method of capturing energy offshore, the method comprising the steps of:
(a) locating an arrangement of energy capture devices in an offshore location;
(b) capturing energy to generate an exportable product using the energy capture devices;
(c) selecting one of the plurality of interface points for connection to an offloading unit; and
(d) connecting the selected interface point to the offloading unit to move the exportable product away from the energy capture devices.

The method comprises the step of locating apparatus according to the first aspect of the invention in an offshore location.

The method comprises the step of towing the arrangement from a first to a second location.

The method may comprise the step of connecting an interface point of a first energy capture device to the offloading unit. The method may further comprise the steps of generating an exportable product using a second energy capture device, and moving the exportable product from the first energy capture device via the connected interface point of the first device.

The method may comprise the steps of: providing an interface point on a first energy capture device; connecting the first energy capture device to a second energy capture device; connecting the interface point of the first energy capture device to the offloading unit; transmitting an exportable product generated by a second energy capture device to the first energy capture device; and removing the exportable product generated by the second energy capture device from the first energy capture device via the connected interface point.

The method may comprise the steps of storing the arrangement of energy capture devices on board a vessel, and using the vessel to transport the stored arrangement from a first to a second location.

The method may comprise the step of deploying and/or recovering the arrangement of energy capture devices from the vessel, e.g. in first and/or second locations.

The method may include the steps of relocating the apparatus and/or arrangement to a second offshore location and capturing energy at the second location using the apparatus.

The method may include the step of relocating the apparatus to a maintenance location and carrying out maintenance on the apparatus.

The offloading unit.may comprise an energy transmission station, and the method may include the steps of relocating the apparatus to an energy transmission station and/or offloading unit. The method may include the additional step of transmitting captured, converted and/or stored energy to an onshore location via the energy transmission station and/or offloading unit. Alternatively, or in addition, the method may include the additional step of transmitting stored energy to an offshore facility for use in that facility.

The method may include the step of capturing wave energy. Alternatively, or in addition, the method may include the step of capturing wind energy. Alternatively, or in addition, the method may include the step of capturing solar energy.

The method may include the step of optimising energy capture of the apparatus by successively relocating the apparatus to a plurality of offshore locations and capturing energy at those locations.

The method may include the step of monitoring or forecasting weather conditions over a geographical area to provide weather information, and relocating the apparatus in response to the weather information.

According to a third aspect of the invention, there is provided a system for offshore capture and export of energy, the system comprising:
- an offshore apparatus comprising an arrangement of energy capture devices operable to capture energy and generate an exportable product, the arrangement comprising a plurality of interface points which are spaced apart from each other; and
- an offloading unit;
wherein a selected interface point of the arrangement is connected to the offloading unit to move the generated exportable product away from the energy capture devices.

The system comprises offshore apparatus according to the first aspect of the invention;

The offloading unit may comprise one or more of the following:
- a seabed station or installation;
- a tanker/transport ship;
- a transport pipeline;
- an electrical transmission cable;
- an energy transmission station;
- a floating buoy or pontoon; and
- an onshore facility.

The offloading unit is adapted to facilitate transport of the export product for subsequent use. The offloading unit may comprise connection equipment adapted to receive and/or connect with the interface points of the arrangement of energy capture devices. The offloading unit may form a part of a pre-installed transport or transmission system. The offloading unit may comprise a subsea termination assembly and/or a connection system for facilitating connection with an interface point of the arrangement.

There will now be described, by way of example only, embodiments of the invention with reference to the accompanying drawings, of which:
Figure 1 is a cross-sectional view of offshore apparatus for capturing energy according to an embodiment of the invention;
Figure 2 is a cross-sectional view of the apparatus of Figure 1 connected to a subsea pipeline station;
Figure 3A is an overhead view of an offshore region with offshore apparatus, according to another embodiment of the invention, operating in a high energy zone;
Figure 3B is an overhead view of the offshore region and apparatus of Figure 3A with an arrangement of energy capture devices operating in the high energy zone and connected to a pipeline for offloading a gas product;
Figure 4 shows an energy capture ship during deployment of a towable array of energy capture devices according to a further embodiment of the invention.

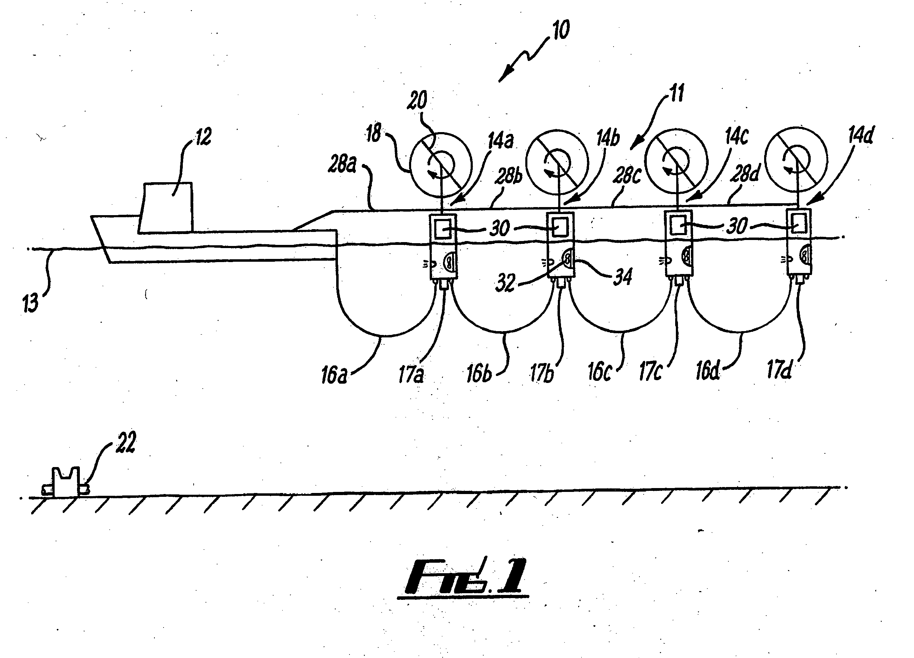

With reference firstly to Figure 1, there is depicted offshore apparatus 10 for capturing energy. In this embodiment, the apparatus 10 comprises a ship 12, which is shown in an offshore location towing a line array 11 of energy capture devices in the form of buoys 14a-d fitted with wind turbines 18 having turbine blades 20 that rotate in response to the flow of air past the blades to generate electrical power. The ship 12 is shown connected to the array 11 via a first chain tether 16a to the energy capture buoy 14a. The buoys 14b-d are connected in succession to adjacent buoys by tethers 16b-d to make up the array. In this case, each of the energy capture buoys are provided with interface points 17a-d that can be used in providing a connection with a subsea transport cable 22 for exporting power from the array.

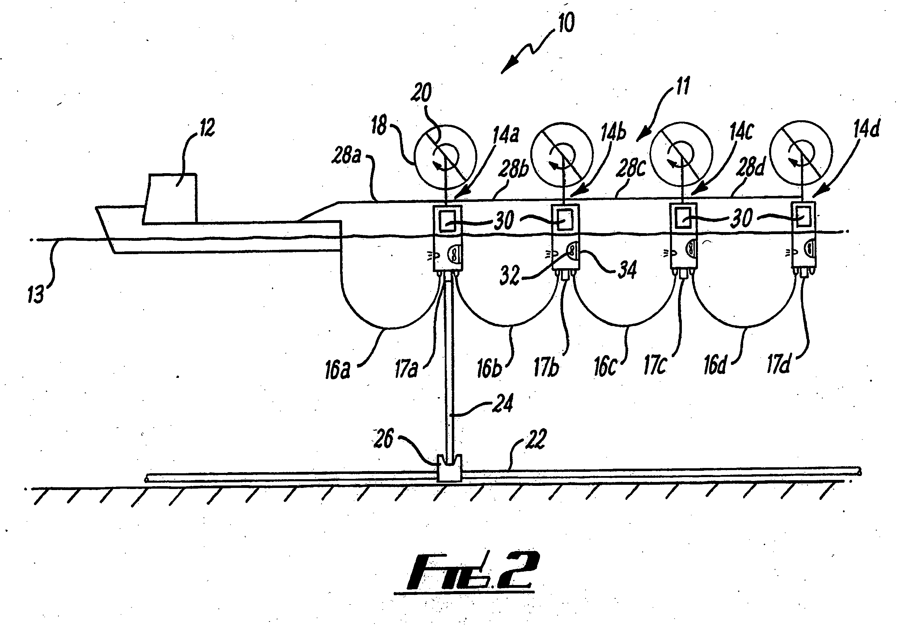

With further reference to Figure 2, the ship 12 is shown having towed the array 11 into an offloading position, where the first energy capture buoy 14a is electrically connected to an offloading station 26 of a transport cable 22.. Each of the energy capture buoys 16a-d carries an export line to allow the buoys to be connected to the transport cable 22.

An upper end of the electrical export line 24 is connected to the energy capture device 14a and the opposing end is connected to the pipeline 22 at the connection station 26. Thus, power that is generated by the operation of the wind turbine 18a can be transmitted from the turbine 18, through the export line 24, into the pipeline cable 22 and then to shore for use. The array, having a number of interfacing points provided on the energy capture buoys, offers a number of possible points and buoys that can be used to connect, and in this case the closest buoy 14a is selected. In other instances, power could be transmitted from one of the other energy capture buoys.

In the present example, the buoys 16a-d are electrically connected to the ship by a power cable 28a and to each other by power cables 28a-d. The power cables enable electrical power generated from each of the energy capture buoys 14b-d to be transmitted successively through the cables 28b-d and to the buoy 14a that is connected to the subsea offloading station. Thus, power produced by the array as a whole can be offloaded through a single connecting energy capture buoy. A portion of the generated power can also be transmitted to the ship 12 via cable 28a for operation of ship equipment.

It will be appreciated that in another embodiment, the ship itself is adapted to connect to the seabed station and power produced by the array is transmitted to the ship for offloading.

The buoys 14a-d also include batteries 30 to temporarily store the electrical power produced by the turbines 18 until a connection has been made to the subsea station for transmitting the power to shore.

The energy capture buoys 14a-d also have propellers 32 and rudders 34 that are used to move the buoys within the tethered array into an optimum orientation for capturing energy, in this case the prevailing wind and to maintain separation between the devices. These buoys can be moved in a lateral and rotational sense so that the blades of individual wind turbines face the local wind direction. Movement of the individual buoys is controlled and steered remotely from the ship 12. The buoys are controlled so that the spacings between buoys in the array are maintained. The ship 12 and the buoys are also controlled to keep the tethers 16 and power cables 28a-d under tension, to facilitate maintaining the shape and lateral extent of the array, which may have a lateral extent in the order of several kilometres.

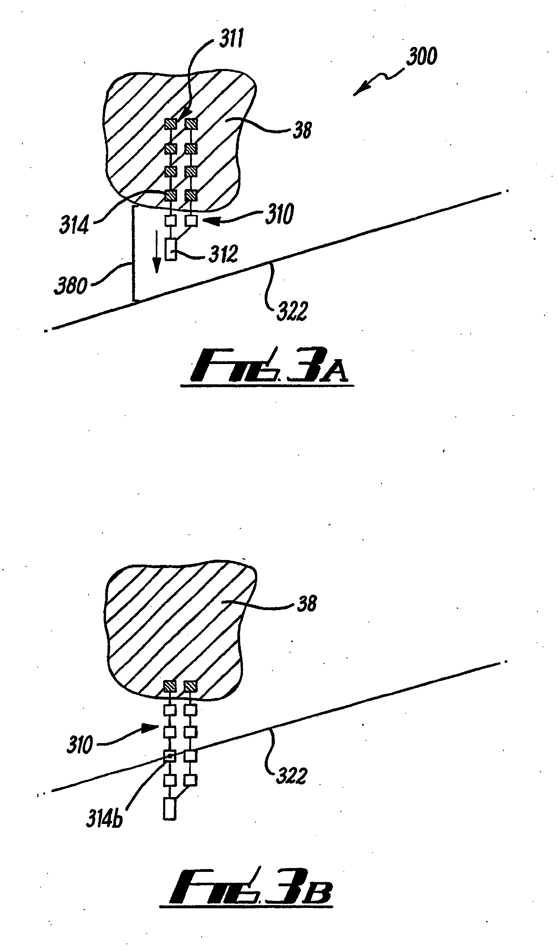

In Figures 3A and 3B, there is shown an offshore region 300 with a transport pipeline 322 and offshore apparatus 310 also located in the region 300. The offshore apparatus is similar to the apparatus 10 described above, although the array 311 of energy capture devices 314 are fluidly connected, have equipment for using generated power to produce gas and have storage tanks for temporarily containing the gas. Also, the ship 312 in this case is shown towing a two-line array of capture devices 314.

In this case, the apparatus 310 is positioned initially in Figure 3A with four of the five of each line of energy capture buoys located within a high energy wind zone 38, providing a high output of power, which is converted to gas. When offloading of the gas is required, the apparatus 210 is moved to a second location as shown in Figure 3B to connect to the gas transport pipeline 322. The array length and dimensions, together with the availability of several connectible energy capture buoys that provide a number interface points, means that the ship only needs to tow the array a short distance 380 in order for the energy capture device 314b to connect with the pipeline. In this example, this is particularly beneficial as the capture devices are still located within the high energy zone allowing production of power to be maintained. In this way, power production and offloading of converted gas is carried out in efficient manner.

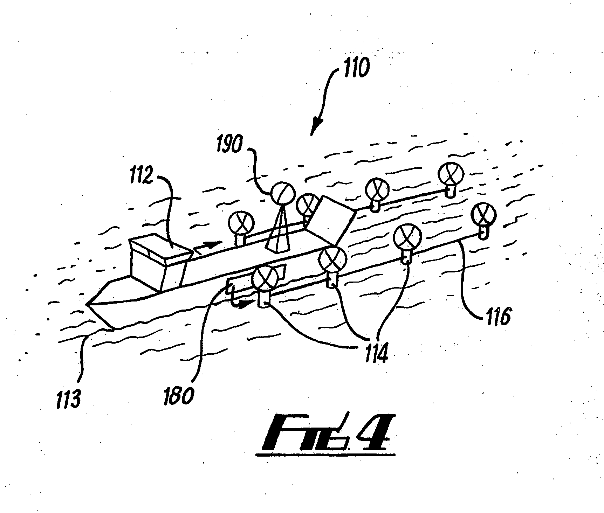

In Figure 4, there is shown a further embodiment of offshore apparatus 110 for capturing energy. Many of the features of the apparatus 110 are similar to those of the apparatus 10 described above, and like features are denoted with the same reference numerals incremented by one hundred.

In this example, the ship 112 is shown during deployment of energy capture buoys 114. The buoys are initially stored, in a transport configuration, in slots in a hold 180 of the ship. While stored, the ship 112 can travel relatively rapidly to a high energy location where it is desirable to capture energy for generating power. In that location, the array of energy capture buoys 114 is deployed into the sea for operation, such as in the manner described with reference to the above embodiments.

In this example, when it is desired to offload the power, the ship recovers the energy capture buoys, and the power stored by the buoys 114 is transmitted through a solid electrical connections provided in individual storage slots (which receive the buoys) on the ship, and through a connection cable carried on board the ship to a subsea station. The ship 112 may then move to another location and re-deploy the array of buoys for energy capture.

In this embodiment, the ship 112 is additionally fitted with a wind turbine 190 and thereby contributes to the production of power together with energy capture buoys.

Overall, the presently described offshore apparatus and method provides significant benefits in efficiency of capture and offloading of power or converted gas. The mobility of the arrangement of energy capture devices, its significant lateral extent and the number of interface points provided in the arrangement helps to reduce costs associated with energy extraction and transport to shore. Further, transport into high energy locations and orientation of individual devices assist with capture efficiency and maintaining operation at a high level of productivity.

Various modifications and improvements may be made without departing from the scope of the invention described.

It will be appreciated that in certain embodiments, the energy capture devices could be connected to the ship or each other via a fibre rope or wire tether. In other embodiments the arrangement of energy capture devices is autonomous in that it may move under its own propulsion, and does riot rely on being towed by a ship. In this case, one of the energy capture devices may be propelled to move the arrangement.

## Claims

1. Offshore apparatus (10, 110, 310) for capturing energy, the apparatus comprising an arrangement of energy capture devices (14, 114, 314) operable to capture energy to generate an exportable product, the arrangement comprising a plurality of interface points (17), which are spaced apart laterally from each other, each interface point (17) being adapted to be selectively connected to an offloading unit (22,322) for moving the exportable product away from the energy capture devices (14, 114, 314), **characterised in that** the arrangement comprises an array of energy capture devices (14, 114, 314) interconnected such that a first energy capture device (14, 114, 314) in the array is movable independently of a second energy capture device (14, 114, 314) in the array in a lateral direction with respect to the second energy capture device (14, 114, 314) in the array so that the first energy capture device (14, 114, 314) is moved into a favourable position for energy capture, and wherein the array of energy capture devices (14, 114, 314) is adapted to be towed by a vessel (12, 112) from a first offshore location to a second offshore location.

2. Offshore apparatus as claimed in claim 1, wherein said first energy capture device (14,114,314) comprises a propeller (32) for moving the first energy capture device (14, 114, 314).

3. Offshore apparatus as claimed in claim 1 or claim 2, wherein each of the plurality of interface points (17) forms part of a separate energy capture device (14, 114, 314).

4. Offshore apparatus as claimed in any one of the preceding claims, wherein the offloading unit (22,322) comprises a seabed installation.

5. Offshore apparatus as claimed in any one of the preceding claims, wherein the exportable product comprises one or more of: electrical power; gas; liquids; and a fuel.

6. Offshore apparatus as claimed in any one of the preceding claims, wherein the arrangement of energy capture devices (14, 114, 314) comprises export apparatus for facilitating removal of the export product from the energy capture devices (14, 114, 314) via the interface points (17), the export apparatus comprising an export line (24) adapted to connect, at one end, to the offloading unit (22,322) and, at a second end, to an interface point (17).

7. Offshore apparatus as claimed in any one of the preceding claim, wherein the arrangement comprises a first energy capture device (14, 114, 314) adapted to be connected to the offloading unit (22,322), the first energy capture device (14, 114, 314) being connected to a second energy capture device (14, 114, 314) to allow the exportable product to be transmitted between the energy capture devices (14, 114,314) and removed from the arrangement via the first energy capture device (14, 114, 314).

8. Offshore apparatus as claimed in any one of the preceding claims, wherein the apparatus comprises storage means (30) for temporarily storing the exportable product.

9. Offshore apparatus as claimed in any one of the preceding claims, wherein the vessel (12, 112) is adapted to deploy and recover the arrangement of energy capture devices (14, 114, 314).

10. A method of capturing energy offshore, the method comprising the steps of:
(a) locating a mobile arrangement of energy capture devices (14, 114, 314) in a first offshore location, the arrangement comprising an array of energy capture devices (14, 114, 314) interconnected such that a first energy capture device (14, 114, 314) in the array is movable independently of a second energy capture device (14,114, 314) in the array in a lateral direction with respect to the second energy capture device (14, 114, 314);
(b) towing the array of energy capture devices (14, 114, 314) from the first offshore location to a second offshore location;
(c) steering and moving an energy capture device (14, 114, 314) laterally within the arrangement into a favourable orientation for energy capture;
(d) capturing energy to generate an exportable product using the energy capture devices (14, 114, 314);
(e) selecting one of a plurality of interface points (17) on the energy capture devices (14, 114, 314) for connection to an offloading unit (22,322); and
(f) connecting the selected interface point (17) to the offloading unit (22,322) to move the exportable product away from the array of energy capture devices (14, 114, 314).

11. A method as claimed in claim 10, wherein the method comprises the step of connecting an interface point (17) of a first energy capture device (14, 114, 314) to the offloading unit (22,322).

12. A method as claimed in claim 11, wherein the method comprises the steps of generating an exportable product using a second energy capture device (144 114, 314), and moving the exportable product from the first energy capture device (14,114, 314) via the connected interface point of the first device (14, 114, 314).

13. A system for offshore capture and export of energy, the system comprising:
- an offshore apparatus as claimed in any one of claims 1 to 9; and
- an offloading unit (22,322);
wherein a selected interface point (17) of the arrangement is connected to the offloading unit (22,322) to move the generated exportable product away from the energy capture devices (14, 114, 314).

14. A system as claimed in claim 13, wherein the offloading unit comprises one or more of the following:
- a seabed station or installation (22,322);
- a tanker/transport ship (12; 112);
- a transport pipeline (22,322);
- an electrical transmission cable (28);
- an energy transmission station (26);
- a floating buoy or pontoon; and
- an onshore facility.

15. A system as claimed in claim 13 or claim 14, wherein the offloading unit (22,322) comprises connection equipment adapted to connect with an interface point (17) of the offshore apparatus.

16. A system as claimed in any one of claims 13 to 15, wherein the offloading unit forms a part of a pre-installed seabed transport system.

## Patentansprüche

1. Offshore-Vorrichtung (10, 110, 310) zur Gewinnung von Energie, wobei die Vorrichtung eine Anordnung von Energiegewinnungseinrichtungen (14, 114, 314) beinhaltet, die betriebsfähig sind, um Energie zu gewinnen, um ein exportierbares Produkt zu erzeugen, wobei die Anordnung eine Vielzahl von seitlich mit Abstand voneinander angeordneten Anschlusspunkten (17) beinhaltet, wobei jeder Anschlusspunkt (17) angepasst ist, um selektiv mit einer Abladeeinheit (22, 322) zum Bewegen des exportierbaren Produkts aus den Energiegewinnungseinrichtungen (14, 114, 314) weg verbunden zu werden, **dadurch gekennzeichnet, dass** die Anordnung eine Reihe von Energiegewinnungseinrichtungen (14, 114, 314) beinhaltet, die miteinander verbunden sind, so dass eine erste Energiegewinnungseinrichtung (14, 114, 314) in der Reihe unabhängig von einer zweiten Energiegewinnungseinrichtung (14, 114, 314) in der Reihe in Bezug auf die zweite Energiegewinnungseinrichtung (14, 114, 314) in der Reihe in einer seitlichen Richtung bewegbar ist, so dass die erste Energiegewinnungseinrichtung (14, 114, 314) in eine für die Energiegewinnung günstige Position bewegt wird, und wobei die Reihe von Energiegewinnungseinrichtungen (14, 114, 314) angepasst ist, um von einem Fahrzeug (12, 112) von einer ersten Offshore-Stelle zu einer zweiten Offshore-Stelle gezogen zu werden.

2. Offshore-Vorrichtung gemäß Anspruch 1, wobei die erste Energiegewinnungseinrichtung (14, 114, 314) einen Propeller (32) zum Bewegen der ersten Energiegewinnungseinrichtung (14, 114, 314) beinhaltet.

3. Offshore-Vorrichtung gemäß Anspruch 1 oder Anspruch 2, wobei jeder der Vielzahl von Anschlusspunkten (17) Teil einer separaten Energiegewinnungseinrichtung (14, 114, 314) bildet.

4. Offshore-Vorrichtung gemäß einem der vorhergehenden Ansprüche, wobei die Abladeeinheit (22, 322) eine Meeresbodeninstallation beinhaltet.

5. Offshore-Vorrichtung gemäß einem der vorhergehenden Ansprüche, wobei das exportierbare Produkt eines oder mehrere von Folgendem beinhaltet: elektrische Leistung; Gas; Flüssigkeiten; und einen Brennstoff.

6. Offshore-Vorrichtung gemäß einem der vorhergehenden Ansprüche, wobei die Anordnung von Energiegewinnungseinrichtungen (14, 114, 314) eine Exportvorrichtung zum Erleichtern des Entfernens des Exportprodukts aus den Energiegewinnungseinrichtungen (14, 114, 314) über die Anschlusspunkte (17) beinhaltet, wobei die Exportvorrichtung eine Exportleitung (24) beinhaltet, die angepasst ist, um an einem Ende mit der Abladeeinheit (22, 322) und an einem zweiten Ende mit einem Anschlusspunkt (17) verbunden zu werden.

7. Offshore-Vorrichtung gemäß einem der vorhergehenden Ansprüche, wobei die Anordnung eine erste Energiegewinnungseinrichtung (14, 114, 314) beinhaltet, die angepasst ist, um mit der Abladeeinheit (22, 322) verbunden zu werden, wobei die erste Energiegewinnungseinrichtung (14, 114, 314) mit einer zweiten Energiegewinnungseinrichtung (14, 114, 314) verbunden ist, um zu ermöglichen, dass das exportierbare Produkt unter den Energiegewinnungseinrichtungen (14, 114, 314) weitergeleitet und über die erste Energiegewinnungseinrichtung (14, 114, 314) aus der Anordnung entfernt wird.

8. Offshore-Vorrichtung gemäß einem der vorhergehenden Ansprüche, wobei die Vorrichtung Lagermittel (30) zum temporären Lagern des exportierbaren Produkts beinhaltet.

9. Offshore-Vorrichtung gemäß einem der vorhergehenden Ansprüche, wobei das Fahrzeug (12, 112) angepasst ist, um die Anordnung von Energiegewinnungseinrichtungen (14, 114, 314) zu stationieren und einzuholen.

10. Ein Verfahren zum Gewinnen von Energie offshore, wobei das Verfahren die folgenden Schritte beinhaltet:
(a) Platzieren einer mobilen Anordnung von Energiegewinnungseinrichtungen (14, 114, 314) an einer ersten Offshore-Stelle, wobei die Anordnung eine Reihe von Energiegewinnungseinrichtungen (14, 114, 314) beinhaltet, die miteinander verbunden sind, so dass eine erste Energiegewinnungseinrichtung (14, 114, 314) in der Reihe unabhängig von einer zweiten Energiegewinnungseinrichtung (14, 114, 314) in der Reihe in Bezug auf die zweite Energiegewinnungseinrichtung (14, 114, 314) in einer seitlichen Richtung bewegbar ist;
(b) Ziehen der Reihe von Energiegewinnungseinrichtungen (14, 114, 314) von der ersten Offshore-Stelle zu einer zweiten Offshore-Stelle;
(c) seitliches Steuern und Bewegen einer Energiegewinnungseinrichtung (14, 114, 314) innerhalb der Anordnung in eine günstige Ausrichtung zur Energiegewinnung;
(d) Gewinnen von Energie, um ein exportierbares Produkt zu erzeugen, unter Verwendung der Energiegewinnungseinrichtungen (14, 114, 314);
(e) Auswählen einer der Vielzahl von Anschlusspunkten (17) auf den Energiegewinnungseinrichtungen (14, 114, 314) zum Verbinden mit einer Abladeeinheit (22, 322); und
(f) Verbinden des ausgewählten Anschlusspunktes (17) mit der Abladeeinheit (22, 322), um das exportierbare Produkt aus der Reihe von Energiegewinnungseinrichtungen (14, 114, 314) weg zu bewegen.

11. Verfahren gemäß Anspruch 10, wobei das Verfahren den Schritt des Verbindens eines Anschlusspunktes (17) einer ersten Energiegewinnungseinrichtung (14, 114, 314) mit der Abladeeinheit (22, 322) beinhaltet.

12. Verfahren gemäß Anspruch 11, wobei das Verfahren die Schritte des Erzeugens eines exportierbaren Produkts unter Verwendung einer zweiten Energiegewinnungseinrichtung (14, 114, 314) und des Bewegens des exportierbaren Produkts aus der ersten Energiegewinnungseinrichtung (14, 114, 314) über den verbundenen Anschlusspunkt der ersten Einrichtung (14, 114, 314) beinhaltet.

13. Ein System zur Offshore-Gewinnung und zum Offshore-Export von Energie, wobei das System Folgendes beinhaltet:
- eine Offshore-Vorrichtung gemäß einem der Ansprüche 1 bis 9; und
- eine Abladeeinheit (22, 322);
wobei ein ausgewählter Anschlusspunkt (17) der Anordnung mit der Abladeeinheit (22, 322) verbunden wird, um das erzeugte exportierbare Produkt aus den Energiegewinnungseinrichtungen (14, 114, 314) weg zu bewegen.

14. System gemäß Anspruch 13, wobei die Abladeeinheit eines oder mehrere von Folgendem beinhaltet:
- eine Meeresbodenstation oder -installation (22, 322);
- einen Tanker/ein Transportschiff (12, 112);
- eine Transportpipeline (22, 322);
- ein elektrisches Weiterleitungskabel (28);
- eine Energieweiterleitungsstation (26);
- eine schwimmende Boje oder einen Ponton; und
- eine Landeinrichtung.

15. System gemäß Anspruch 13 oder Anspruch 14, wobei die Abladeeinheit (22, 322) Verbindungsausrüstung beinhaltet, die angepasst ist, um mit einem Anschlusspunkt (17) der Offshore-Vorrichtung verbunden zu werden.

16. System gemäß einem der Ansprüche 13 bis 15, wobei die Abladeeinheit einen Teil eines vorinstallierten Meeresbodentransportsystems bildet.

## Revendications

1. Appareil en mer (10, 110, 310) destiné à capturer de l'énergie, l'appareil comprenant un arrangement de dispositifs de capture d'énergie (14, 114, 314) pouvant être amenés à fonctionner pour capturer de l'énergie afin de générer un produit exportable, l'arrangement comprenant une pluralité de points d'interface (17), lesquels sont espacés latéralement les uns des autres, chaque point d'interface (17) étant conçu pour être raccordé de façon sélective à une unité de déchargement (22, 322) pour éloigner en le déplaçant le produit exportable des dispositifs de capture d'énergie (14, 114, 314), **caractérisé en ce que** l'arrangement comprend une matrice de dispositifs de capture d'énergie (14, 114, 314) raccordés entre eux de telle façon qu'un premier dispositif de capture d'énergie (14, 114, 314) dans la matrice puisse être déplacé indépendamment d'un deuxième dispositif de capture d'énergie (14, 114, 314) dans la matrice dans une direction latérale par rapport au deuxième dispositif de capture d'énergie (14, 114, 314) dans la matrice de sorte que le premier dispositif de capture d'énergie (14, 114, 314) soit déplacé dans une position favorable à la capture d'énergie, et dans lequel la matrice de dispositifs de capture d'énergie (14, 114, 314) est conçue pour être remorquée par un navire (12, 112) d'un premier emplacement en mer à un deuxième emplacement en mer.

2. Appareil en mer tel que revendiqué dans la revendication 1, dans lequel ledit premier dispositif de capture d'énergie (14, 114, 314) comprend une hélice (32) destinée à déplacer le premier dispositif de capture d'énergie (14, 114, 314).

3. Appareil en mer tel que revendiqué dans la revendication 1 ou la revendication 2, dans lequel chaque point d'interface de la pluralité de points d'interface (17) forme une partie d'un dispositif de capture d'énergie (14, 114, 314) distinct.

4. Appareil en mer tel que revendiqué dans l'une quelconque des revendications précédentes, dans lequel l'unité de déchargement (22, 322) comprend une installation sous-marine.

5. Appareil en mer tel que revendiqué dans l'une quelconque des revendications précédentes, dans lequel le produit exportable comprend un ou plusieurs éléments parmi : une énergie électrique ; un gaz ; des liquides ; et un combustible.

6. Appareil en mer tel que revendiqué dans l'une quelconque des revendications précédentes, dans lequel l'arrangement de dispositifs de capture d'énergie (14, 114, 314) comprend un appareil d'exportation destiné à faciliter le retrait du produit d'exportation des dispositifs de capture d'énergie (14, 114, 314) par le biais des points d'interface (17), l'appareil d'exportation comprenant une conduite d'exportation (24) conçue pour se raccorder, au niveau d'une extrémité, à l'unité de déchargement (22, 322) et, au niveau d'une deuxième extrémité, à un point d'interface (17).

7. Appareil en mer tel que revendiqué dans l'une quelconque des revendications précédentes, dans lequel l'arrangement comprend un premier dispositif de capture d'énergie (14, 114, 314) conçu pour être raccordé à l'unité de déchargement (22, 322), le premier dispositif de capture d'énergie (14, 114, 314) étant raccordé à un deuxième dispositif de capture d'énergie (14, 114, 314) afin de permettre au produit exportable d'être transmis entre les dispositifs de capture d'énergie (14, 114, 314) et retiré de l'arrangement par le biais du premier dispositif de capture d'énergie (14, 114, 314).

8. Appareil en mer tel que revendiqué dans l'une quelconque des revendications précédentes, dans lequel l'appareil comprend un moyen de stockage (30) destiné à stocker de façon temporaire le produit exportable.

9. Appareil en mer tel que revendiqué dans l'une quelconque des revendications précédentes, dans lequel le navire (12, 112) est conçu pour déployer et récupérer l'arrangement de dispositifs de capture d'énergie (14, 114, 314).

10. Une méthode pour capturer de l'énergie en mer, la méthode comprenant les étapes consistant à :
(a) placer un arrangement mobile de dispositifs de capture d'énergie (14, 114, 314) dans un premier emplacement en mer, l'arrangement comprenant une matrice de dispositifs de capture d'énergie (14, 114, 314) raccordés entre eux de telle façon qu'un premier dispositif de capture d'énergie (14, 114, 314) dans la matrice puisse être déplacé indépendamment d'un deuxième dispositif de capture d'énergie (14, 114, 314) dans la matrice dans une direction latérale par rapport au deuxième dispositif de capture d'énergie (14, 114, 314) ;
(b) remorquer la matrice de dispositifs de capture d'énergie (14, 114, 314) du premier emplacement en mer à un deuxième emplacement en mer ;
(c) manoeuvrer et déplacer un dispositif de capture d'énergie (14, 114, 314) latéralement au sein de l'arrangement pour le mettre dans une orientation favorable à une capture d'énergie ;
(d) capturer de l'énergie afin de générer un produit exportable en utilisant les dispositifs de capture d'énergie (14, 114, 314) ;
(e) sélectionner un point d'interface d'une pluralité de points d'interface (17) sur les dispositifs de capture d'énergie (14, 114, 314) de façon à le raccorder à une unité de déchargement (22, 322) ; et
(f) raccorder le point d'interface (17) sélectionné à l'unité de déchargement (22, 322) afin d'éloigner en le déplaçant le produit exportable de la matrice de dispositifs de capture d'énergie (14, 114, 314).

11. Une méthode telle que revendiquée dans la revendication 10, la méthode comprenant l'étape consistant à raccorder un point d'interface (17) d'un premier dispositif de capture d'énergie (14, 114, 314) à l'unité de déchargement (22, 322).

12. Une méthode telle que revendiquée dans la revendication 11, la méthode comprenant les étapes consistant à générer un produit exportable en utilisant un deuxième dispositif de capture d'énergie (14, 114, 314), et à déplacer le produit exportable du premier dispositif de capture d'énergie (14, 114, 314) par le biais du point d'interface raccordé du premier dispositif (14, 114, 314).

13. Un système pour la capture et l'exportation en mer d'énergie, le système comprenant :
- un appareil en mer tel que revendiqué dans l'une quelconque des revendications 1 à 9 ; et
- une unité de déchargement (22, 322) ;
dans lequel un point d'interface (17) sélectionné de l'arrangement est raccordé à l'unité de déchargement (22, 322) afin d'éloigner en le déplaçant le produit exportable généré des dispositifs de capture d'énergie (14, 114, 314).

14. Un système tel que revendiqué dans la revendication 13, dans lequel l'unité de déchargement comprend un ou plusieurs des éléments suivants :
- une station ou une installation sous-marine (22, 322) ;
- un bateau citerne/de transport (12, 112) ;
- un pipeline de transport (22, 322) ;
- un câble de transmission électrique (28) ;
- une station de transmission d'énergie (26) ;
- une bouée flottante ou un ponton flottant ; et
- un équipement à terre.

15. Un système tel que revendiqué dans la revendication 13 ou la revendication 14, dans lequel l'unité de déchargement (22, 322) comprend un équipement de raccordement conçu pour se raccorder avec un point d'interface (17) de l'appareil en mer.

16. Un système tel que revendiqué dans l'une quelconque des revendications 13 à 15, dans lequel l'unité de déchargement forme une partie d'un système de transport sous-marin pré-installé.
